# EUROPEAN PATENT APPLICATION

(11) **EP 3 214 739 A1**
(43) Date of publication of application: **06.09.2017**
(21) Application number: 15854419.7
(22) Date of filing: 27.10.2015
(51) Int. Cl.: H02K 41/02

(54) **LINEAR ACTUATOR**

(30) Priority: 29.10.2014 JP 2014220274
(71) Applicant: KYB Corporation, Tokyo 105-6111 (JP)
(72) Inventor: SATOU, Kousuke, Tokyo 105-6111 (JP)
(74) Representative: Grünecker Patent- und Rechtsanwälte PartG mbB
(86) International application number: PCT/JP2015/080287
(87) International publication number: WO 2016/068150

(57) **Abstract**

A linear actuator (100) includes, a first tube (10) provided with a plurality of coils (41) placed thereinside, the plurality of coils (41) being held by a tubular yoke (40); a rod (30) movable in an axial direction inside the yoke (40); and a plurality of permanent magnets (31) held by the rod while being lined up in the axial direction, the plurality of permanent magnets (31) opposing the plurality of coils (41). An inner circumferential surface of the first tube (10) has a groove (16) running in a direction of an axis line, and wires (44) connected to the plurality of coils (41) are housed in the groove (16).

## Description

### TECHNICAL FIELD

The present invention relates to a linear actuator that is extended and contracted in an axial direction by an electromagnetic force.

### BACKGROUND ART

JP 2008-253009A discloses an electric actuator in which a stator provided with a plurality of stator cores and armature coils is placed inside a fixed-side main body, and outer circumferences of the stator cores of the stator have groove portions for directing wires drawn from the armature coils. In the electric actuator described in JP 2008-253009A, the wires drawn from the armature coils are directed to a wire substrate, which is disposed at the end, via the inside of the groove portions of the stator cores.

### SUMMARY OF INVENTION

With the electric actuator described in JP 2008-253009A, however, there is a possibility that the wires drawn from the armature coils are caught on an inner circumferential surface of the fixed-side main body during the insertion of the stator into the fixed-side main body.

The present invention aims to provide a linear actuator with which wires connected to a plurality of coils do not have the possibility of getting caught on an inner circumferential surface of a main body during the insertion of a yoke into the inner circumferential surface of the main body.

According to one aspect of the present invention, a linear actuator includes a main body portion provided with a plurality of coils placed thereinside, the plurality of coils being held by a tubular yoke; a rod movable in an axial direction inside the yoke; and a plurality of permanent magnets held by the rod while being lined up in the axial direction, the plurality of permanent magnets opposing the plurality of coils. An inner circumferential surface of the main body portion has a groove running in a direction of an axis line, and wires connected to the plurality of coils are housed in the groove.

### BRIEF DESCRIPTION OF DRAWINGS

FIG. 1 is a cross-sectional view of a linear actuator in a contracted state according to a first embodiment of the present invention, taken along an axial direction.
FIG. 2 is a cross-sectional view taken along the line A-A in FIG. 1.
FIG. 3 is a cross-sectional view taken along the line B-B in FIG. 1.
FIG. 4 is a cross-sectional view of a linear actuator in a contracted state according to a second embodiment of the present invention, taken along an axial direction.
FIG. 5 is a cross-sectional view taken along the line C-C in FIG. 4.
FIG. 6 is a cross-sectional view taken along the line D-D in FIG. 4.

### DESCRIPTION OF EMBODIMENTS

Embodiments of the present invention will now be described with reference to the drawings.

### First Embodiment

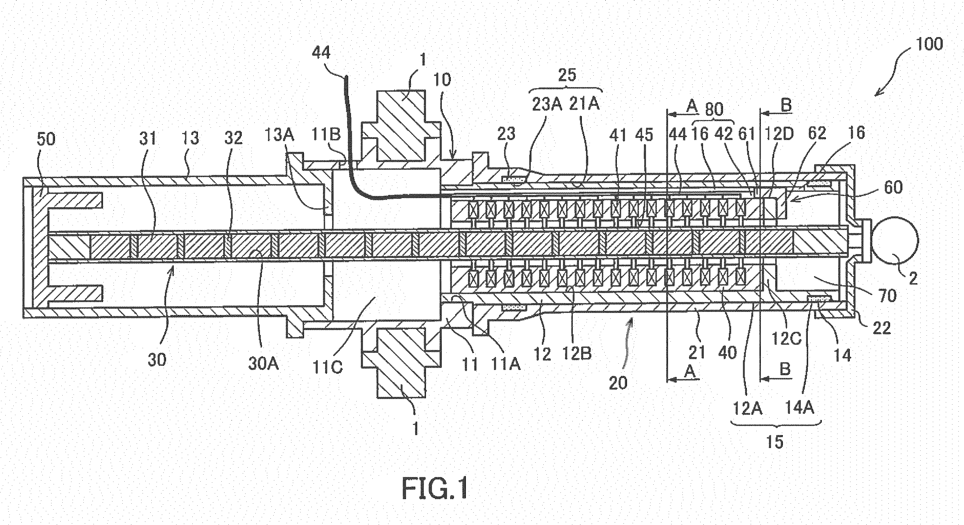

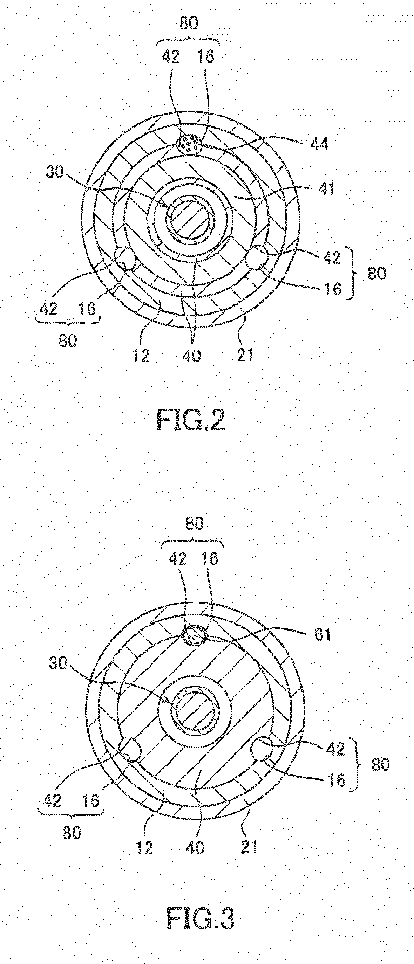

The following describes a linear actuator 100 according to a first embodiment of the present invention with reference to FIGs. 1 to 3. FIG. 1 is a cross-sectional view of the linear actuator 100 in a contracted state, taken along an axial direction. FIG. 2 is a cross-sectional view taken along the line A-A in FIG. 1. FIG. 3 is a cross-sectional view taken along the line B-B in FIG. 1.

The linear actuator 100 includes a first tube 10 serving as a main body portion, a second tube 20 that is slidably mounted on an outer circumference of the first tube 10, a rod 30 that is fixed to an end of the second tube 20 and holds permanent magnets 31, and a yoke 40 that is fit inside the first tube 10 and holds coils 41 opposing the permanent magnets 31.

In the linear actuator 100, a thrust (an electromagnetic force) that drives the rod 30 in the axial direction is generated in accordance with a current flowing through the coils 41, and the first tube 10 and the second tube 20 are relatively displaced on the basis of the thrust. This causes the linear actuator 100 to extend and contract between a fully contracted position shown in FIG. 1 and a fully extended position (not shown).

The first tube 10 includes a base portion 11 having a shape of a hollow cylinder, an inner tube 12 that is fixed to one end of the base portion 11, and a guide tube 13 that is fixed to the other end of the base portion 11.

The base portion 11 is a tubular member that is open at both ends. A pair of trunnion shafts 1 projecting in a radial direction is fixed to an outer circumference of the base portion 11. The pair of trunnion shafts 1 is rotatably supported by an external member (not shown). Accordingly, the linear actuator 100 is held in such a manner that it is rotatable with respect to the external member.

The second tube 20 includes an outer tube 21 that has a shape of a hollow cylinder and is open at both ends, and a cap 22 that is attached to one end of the outer tube 21. One end of the second tube 20 is closed by the cap 22. The other end of the second tube 20 is an open end into which the inner tube 12 of the first tube 10 is inserted. A joint member 2 that is joined with the external member (not shown) is fixed to an outer side surface of the cap 22.

The inner tube 12 is slidably inserted into the outer tube 21 while being mounted on the base portion 11. One end of the inner tube 12 is fixedly fit on an inner circumferential surface 11A of the base portion 11. That is to say, the inner tube 12 is supported by the base portion 11 at one end.

The linear actuator 100 includes a first linear guide portion 15 and a second linear guide portion 25 for supporting the first tube 10 and the second tube 20 in such a manner that the first tube 10 and the second tube 20 can be relatively displaced in the axial direction.

A ring-shaped first bearing 14 is mounted on an outer circumference of a free end of the inner tube 12. A bearing surface (an outer circumferential surface) 14A of the first bearing 14 is in sliding contact with an inner circumferential surface 21A of the outer tube 21. The first linear guide portion 15 is composed of an outer circumferential surface 12A of the inner tube 12 and the bearing surface 14A of the first bearing 14.

A ring-shaped second bearing 23 is mounted on an inner circumference of the open end side of the outer tube 21. A bearing surface (an inner circumferential surface) 23A of the second bearing 23 is in sliding contact with the outer circumferential surface 12A of the inner tube 12. The second linear guide portion 25 is composed of the inner circumferential surface 21A of the outer tube 21 and the bearing surface 23A of the second bearing 23.

During the extension and contraction of the linear actuator 100, in the first linear guide portion 15, the bearing surface 14A of the first bearing 14 is in sliding contact with the inner circumferential surface 21A of the outer tube 21. On the other hand, in the second linear guide portion 25, the bearing surface 23A of the second bearing 23 is in sliding contact with the outer circumferential surface 12A of the inner tube 12. Accordingly, the inner tube 12 and the outer tube 21 smoothly slide on each other. The outer circumferential surface 12A of the inner tube 12 and the inner circumferential surface 21A of the outer tube 21 oppose each other, with no gap therebetween, via the first bearing 14 and the second bearing 23.

The guide tube 13 is a tubular member that is open at both ends. An end of the guide tube 13 on the base portion 11 side has an annular projected portion 13A that projects inward. A rod guide 50 that is fixed to an end of the rod 30 is slidably placed inside the guide tube 13.

The rod 30 is a pole-like member with a hollow portion 30A. One end of the rod 30 is fixed to the inner side of the cap 22 that constitutes an end of the second tube 20. Furthermore, the other end of the rod 30 is fixed to the aforementioned rod guide 50. As the rod guide 50 is mounted on the other end of the rod 30, the guide tube 13 and the rod 30 are reliably rendered coaxial. This prevents the end of the rod 30 from swinging in the radial direction during the extension and contraction of the linear actuator 100.

The plurality of permanent magnets 31 are held in the hollow portion 30A of the rod 30 while being lined up in the axial direction. Each permanent magnet 31 has a columnar shape, and is magnetized in such a manner that its N pole and S pole are positioned in the axial direction. Neighboring permanent magnets 31 are placed in such a manner that their ends of the same polarity oppose each other. Furthermore, a yoke 32 is provided between neighboring permanent magnets 31. Note that the yokes 32 need not necessarily be provided, and neighboring permanent magnets 31 may be in contact with each other.

The yoke 40 having a shape of a hollow cylinder is mounted on an inner circumferential surface 12B of the inner tube 12. The yoke 40 has an insertion hole 45 through which the rod 30 is inserted in the axial direction. The plurality of coils 41 are embedded in the yoke 40. Note that the yoke 40 is made by integrally stacking ring-shaped members in the axial direction, with each coil 41 wound inside a space formed by contacting surfaces of neighboring ring-shaped members. The plurality of coils 41 are lined up in the axial direction so as to oppose the permanent magnets 31.

The inner tube 12 has an annular projected portion 12C that projects inward. The projected portion 12C of the inner tube 12 has a through hole 12D. The inner circumferential surface 12B of the inner tube 12 has a plurality of grooves 16 each running in a direction of an axis line. The grooves 16 penetrate the projected portion12C, thereby allowing communication between an internal space 11C of the base portion 11 and a space 70 formed by the inner tube 12, the outer tube 21, and the cap 22.

An outer circumferential surface of the yoke 40 has a plurality of grooves 42 each running in a direction of an axis line. The grooves 42 are positioned so as to face the grooves 16 of the inner tube 12. Wires 44 from the plurality of coils 41 are housed in the grooves 42. Tunnel-like spaces 80 are formed by the grooves 16 of the inner tube 12 and the grooves 42 of the yoke 40.

The yoke 40 is inserted into the inner tube 12 to the point where the yoke 40 is in contact with the projected portion 12C, in such a manner that each space 80 is formed by the groove 16 and the groove 42 opposing each other. In this way, even if the wires 44 housed in the grooves 42 protrude from the outer circumferential surface of the yoke 40, the wires 44 will be located inside the spaces 80 formed by the grooves 16 and the grooves 42. This prevents the wires 44 from getting caught on the inner circumferential surface 12B of the inner tube 12 during the insertion of the yoke 40.

As the yoke 40 is inserted into the inner tube 12 in the foregoing manner, the wires 44 are housed in the spaces 80 formed by the grooves 16 and the grooves 42.

The wires 44 from the plurality of coils 41 are drawn to the outside via the spaces 80 and via the internal space 11C and an opening 11B of the base portion 11. Once the wires 44 have been drawn to the outside, they are connected to a controller (not shown). The controller controls the thrust generated by the linear actuator 100 and the directions of the generated thrust (the extension and contraction directions) by controlling the intensity and phase of the current supplied to the coils 41.

Note that the grooves 16 and the grooves 42 are not limited to being provided at three positions, however, the grooves 16 and the grooves 42 may be provided at four positions, or any number of grooves 16 and grooves 42 may be provided. Furthermore, the grooves 16 and the grooves 42 are not limited to having an arc-shaped cross-section, and may have a triangular or quadrilateral cross-section.

A detent member 60 includes a pin 61 and a flange-like attachment portion 62. The pin 61 is inserted through the through hole 12D, which is provided in the projected portion 12C, to be inserted into the spaces 80. The attachment portion 62 of the detent member 60 is attached to the projected portion 12C using a screw (not shown). Accordingly, the detent member 60 prevents relative rotations of the inner tube 12 and the yoke 40.

Note that the pin 61 is not limited to having a columnar shape, and may have a prismatic shape, may be hollow, or may have the same cross-section as the spaces 80. Moreover, as long as the pin 61 latches with one of the grooves 42, the pin 61 may not include a portion that is inserted into one of the grooves 16.

A description is now given of the operation of the linear actuator 100.

In the linear actuator 100, when the coils 41 are supplied with a current of a predetermined direction, a thrust that drives the rod 30 in one direction (a rightward direction in FIG. 1) is generated. Along with the driving of the rod 30 in one direction, the linear actuator 100 extends as the outer tube 21 of the second tube 20 moves while sliding with respect to the inner tube 12 of the first tube 10. During the extension, air in the internal space 11C of the base portion 11 is suctioned into the space 70 via the grooves 16.

When the linear actuator 100 has extended to the fully extended position, the rod guide 50 is in contact with a side surface of the projected portion 13A, thereby restricting a further movement of the rod 30. As such, the projected portion 13A functions as a stopper.

On the other hand, when the coils 41 are supplied with a current with a phase opposite to a phase of the current supplied during the extension, a thrust that drives the rod 30 in the other direction (a leftward direction in FIG. 1) is generated. Along with the driving of the rod 30 in the other direction, the linear actuator 100 contracts as the outer tube 21 of the second tube 20 moves while sliding with respect to the inner tube 12 of the first tube 10. During the contraction, air in the space 70 is discharged to the internal space 11C of the base portion 11 via the grooves 16.

When the linear actuator 100 has contracted to the fully contracted position, an open end of the outer tube 21 is in contact with an end of the base portion 11, thereby restricting a further movement of the rod 30. As such, the open end of the outer tube 21 functions as a stopper.

In other words, the grooves 16 function as breathing channels. Furthermore, even if vibration is generated by the operation of the linear actuator 100, the yoke 40 does not rotate with respect to the first tube 10 because the detent member 60 is attached to the inner tube 12 and the pin 61 of the detent member 60 is inserted into one of the spaces 80.

The foregoing first embodiment achieves the following effects.

The yoke 40 is inserted into the inner tube 12 to the point where the yoke 40 is in contact with the projected portion 12C, in such a manner that each space 80 is formed by the groove 16 and the groove 42 opposing each other. In this way, even if the wires 44 housed in the grooves 42 protrude from the outer circumferential surface of the yoke 40, the wires 44 will be located inside the spaces 80 formed by the grooves 16 and the grooves 42. This prevents the wires 44 from getting caught on the inner circumferential surface 12B of the inner tube 12 during the insertion of the yoke 40. Furthermore, as the grooves 16 function as the breathing channels, air resistance can be reduced during a high-speed operation of the linear actuator 100.

Furthermore, the detent member 60 is attached to the inner tube 12, and the pin 61 of the detent member 60 is inserted into the recess 40A of the yoke 40. This can prevent relative rotations of the first tube 10 and the yoke 40.

### Second Embodiment

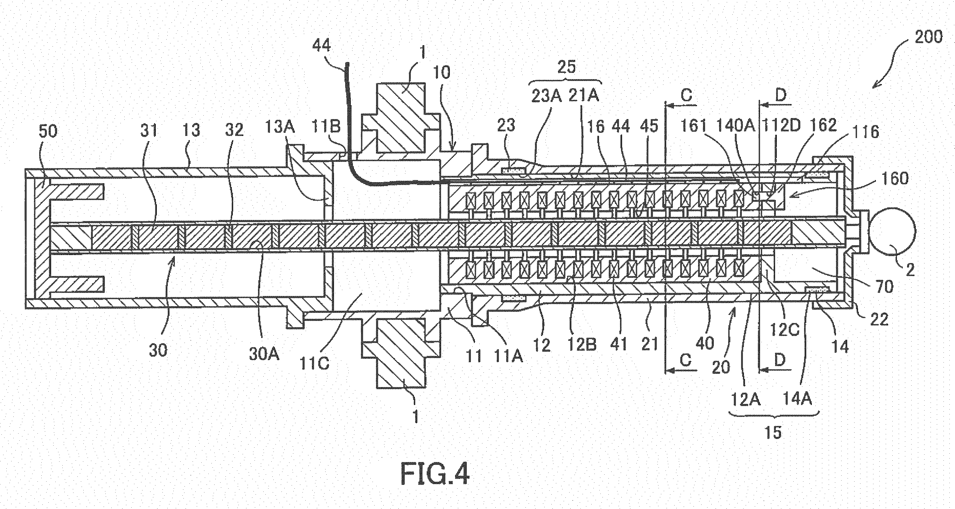

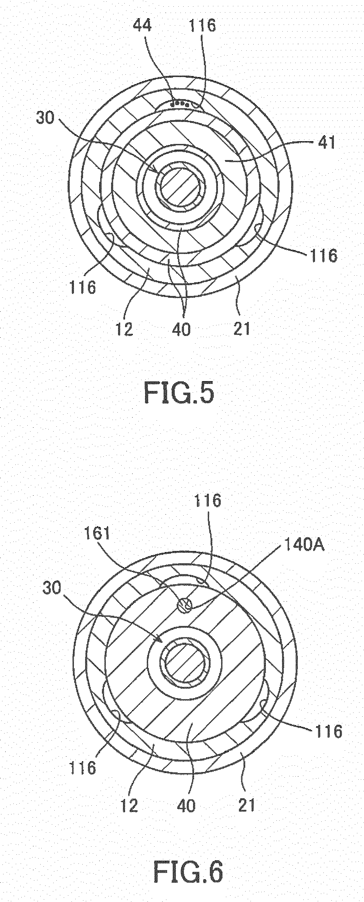

The following describes a linear actuator 200 according to a second embodiment of the present invention with reference to FIGs. 4 to 6. FIG. 4 is a cross-sectional view of the linear actuator in a contracted state according to the second embodiment of the present invention, taken along an axial direction. FIG. 5 is a cross-sectional view taken along the line C-C in FIG. 4. FIG. 6 is a cross-sectional view taken along the line D-D in FIG. 4.

In the following description of the second embodiment, differences from the above first embodiment will be focused. Furthermore, components that are the same as components of the linear actuator 100 according to the first embodiment will be given the same reference signs thereas, and the explanation thereof will be omitted.

The second embodiment differs from the first embodiment in that only an inner circumferential surface of an inner tube 12 has grooves 116 and an outer circumferential surface of a yoke 40 does not have grooves, and that a pin 161 is inserted into a recess 140A of an end face of the yoke 40.

An inner circumferential surface 12B of the inner tube 12 has a plurality of grooves 116 each running in a direction of an axis line. The grooves 116 penetrate a projected portion 12C, thereby allowing communication between an internal space 11C of a base portion 11 and a space 70 formed by the inner tube 12, an outer tube 21, and a cap 22. Note that the grooves 116 are not limited to being provided at three positions. The grooves 116 may be provided at four positions, or any number of grooves 116 may be provided. Furthermore, the grooves 116 are not limited to having an arc-shaped cross-section, and may have a triangular or quadrilateral cross-section.

The yoke 40 is inserted into the inner tube 12 in such a manner that wires 44 from a plurality of coils 41 are positioned inside the grooves 116. As the insertion is performed in such a manner that the wires 44 are positioned inside the grooves 116, the wires 44 can be prevented from getting caught on the inner circumferential surface 12B of the inner tube 12. As the yoke 40 is inserted into the inner tube 12 in the foregoing manner, the wires 44 are housed in the grooves 116.

The projected portion 12C of the inner tube 12 has a through hole 112D. Furthermore, the end face of the yoke 40 on the projected portion 12C side has the recess 140A. The recess 140A is positioned so as to face the through hole 112D.

A detent member 160 includes the pin 161 and a flange-like attachment portion 162. The pin 161 is inserted through the through hole 112D, which is provided in the projected portion 12C, to be inserted into the recess 140A of the yoke 40. The attachment portion 162 of the detent member 160 is attached to the projected portion 12C using a screw (not shown). Accordingly, the detent member 160 prevents relative rotations of the inner tube 12 and the yoke 40.

Note that the detent member 160 is not limited to being attached to the projected portion 12C using the screw. The detent member 160 may be attached to the projected portion 12C by adhesion, welding, press fitting, or other means. Moreover, the detent member 160 may not include the attachment portion 162, in which case the pin 161 is attached directly to the projected portion 12C. Furthermore, the pin 161 is not limited to having a columnar shape, and may have a prismatic shape or may be hollow. Instead of being attached to the projected portion 12C, the detent member 160 may be attached to the base portion 11 or an end of the inner tube 12 on the base portion 11 side.

The foregoing second embodiment achieves the following effects in addition to the effects achieved by the first embodiment.

As the outer circumferential surface of the yoke 40 does not have grooves, the number of processes related to groove formation can be reduced. Furthermore, as the yoke 40 does not have grooves, the influence on the magnetic property of the yoke 40 is reduced.

Embodiments of this invention were described above, but the above embodiments are merely examples of applications of this invention, and the technical scope of this invention is not limited to the specific constitutions of the above embodiments.

This application claims priority based on Japanese Patent Application No.2014-220274 filed with the Japan Patent Office on October 29, 2014, the entire contents of which are incorporated into this specification.

## Claims

1. A linear actuator, comprising:
a main body portion provided with a plurality of coils placed thereinside, the plurality of coils being held by a tubular yoke;
a rod movable in an axial direction inside the yoke; and
a plurality of permanent magnets held by the rod while being lined up in the axial direction, the plurality of permanent magnets opposing the plurality of coils,
wherein
an inner circumferential surface of the main body portion has a groove running in a direction of an axis line, and wires connected to the plurality of coils are housed in the groove.

2. The linear actuator according to claim 1,
wherein
an outer circumferential surface of the yoke has a groove running in the direction of the axis line, and
the wires are housed in a space formed by the groove of the main body portion and the groove of the yoke.

3. The linear actuator according to claim 1, further comprising
a detent member for preventing relative rotations of the main body portion and the yoke.
